# EUROPEAN PATENT APPLICATION

(11) **EP 4 528 408 A1**
(43) Date of publication of application: **26.03.2025**
(21) Application number: 24193337.3
(22) Date of filing: 07.08.2024
(51) Int. Cl.: G05B 19/404

(54) **MACHINE TOOL**

(30) Priority: 31.08.2023 JP 2023140714
(71) Applicant: Star Micronics Co., Ltd., Shizuoka-shi, Shizuoka 422-8654 (JP)
(72) Inventor: Kamo, Shotaro, SHIZUOKA-SHI, SHIZUOKA (JP)
(74) Representative: Grünecker Patent- und Rechtsanwälte PartG mbB

(57) **Abstract**

Provided is a machine tool with which a load acting on a drive system for driving a drive subject when the drive subject starts to move toward a target position can be reduced.

The machine tool includes a guide mechanism for guiding at least one drive subject from among a tool and a workpiece, a servo motor that moves the drive subject guided by the guide mechanism, and a control unit that controls the servo motor so as to move the drive subject from an initial position to the target position. The control unit controls the servo motor so as to apply vibration in which an advancing motion toward the target position and a retreating motion opposite to the advancing motion are performed repeatedly to the drive subject for a set period up to a point at which the drive subject starts to move toward the target position from the initial position.

## Description

### CROSS-REFERENCES

The application claims priority of Japanese Patent Application No. 2023-140714 filed on August 31, 2023. The contents of this application are incorporated herein by reference in their entirety.

### BACKGROUND OF THE INVENTION

### 1. Field of the Invention

The present invention relates to a machine tool that machines a workpiece using a tool.

### 2. Description of the Related Art

A numerical control (NC) lathe that uses a tool to cut a workpiece gripped by a spindle is known as a machine tool. An NC lathe includes a guide mechanism for guiding the tool and the workpiece, which serve as drive subjects, a servo motor, a servo amplifier, an NC apparatus, and so on (see Japanese Patent Application Publication No. 2022-177508, for example). A sliding guide mechanism such as a combination of a dovetail and a dovetail groove, a rolling guide mechanism such as a ball screw or a linear guide, or the like is used as the guide mechanism.

### SUMMARY OF THE INVENTION

Friction is generated by a guide surface of the guide mechanism, a sealing O ring, and so on, and therefore lubricating oil is supplied to the guide surface of the guide mechanism and so on. When the drive subject is stopped, an "oil film shortage", in which a film of lubricating oil on the guide surface and so on disappears, may occur. For example, when an oil film shortage occurs on the guide surface, the guide surface sticks, and therefore the servo motor generates large torque in order to start moving the drive subject. Accordingly, when the drive subject starts to move toward a target position, a large load may act on a drive system for driving the drive subject, for example a drive shaft of the servo motor, and as a result, the drive system may deteriorate. It is therefore desirable to reduce the load exerted on the drive system when the drive subject starts to move toward the target position. Note that this problem is not limited to a lathe and exists in various machine tools, such as machining centers.

The present invention discloses a machine tool with which the load acting on the drive system for driving the drive subject when the drive subject starts to move toward the target position can be reduced.

A machine tool of the present invention is a machine tool for machining a workpiece using a tool, the machine tool including a guide mechanism for guiding at least one drive subject from among the tool and the workpiece; a servo motor that moves the drive subject guided by the guide mechanism; and a control unit that controls the servo motor so as to move the drive subject from an initial position to a target position, wherein the control unit controls the servo motor so as to apply vibration in which an advancing motion toward the target position and a retreating motion opposite to the advancing motion are performed repeatedly to the drive subject for a set period up to a point at which the drive subject starts to move toward the target position from the initial position.

According to the present invention, it is possible to provide a machine tool with which a load acting on a drive system for driving the drive subject when the drive subject starts to move toward a target position can be reduced.

### BRIEF DESCRIPTION OF THE DRAWINGS

FIG. 1 is a schematic view showing an example configuration of a machine tool;
FIG. 2 is a schematic block diagram showing an example configuration of an electric circuit of the machine tool;
FIG. 3 is a schematic block diagram showing an example of a semi-closed loop control system;
FIG. 4 is a schematic view showing an example of a Stribeck curve;
FIG. 5 is a schematic view showing examples of lubrication states of guide surfaces;
FIG. 6 is a schematic view showing an example in which vibration is applied to a drive subject for a set period up to a point at which the drive subject starts to move toward a target position from an initial position;
FIG. 7 is a schematic view showing an example of the vibration;
FIG. 8 is a schematic view showing an example in which the vibration continues to be applied as a component to movement of the drive subject from the point at which the drive subject starts to move toward the target position up to a midway position;
FIG. 9 is a schematic flowchart showing an example of vibration condition confirmation processing;
FIG. 10 is a schematic view showing a current command having sweep frequency variation;
FIG. 11 is a schematic view showing an example of an amplitude magnification M relative to a frequency f;
FIG. 12 is a schematic view showing an example of a phase delay ϕ relative to the frequency f; and
FIG. 13 is a schematic flowchart showing an example of frequency determination processing.

### DESCRIPTION OF THE PREFERRED EMBODIMENTS

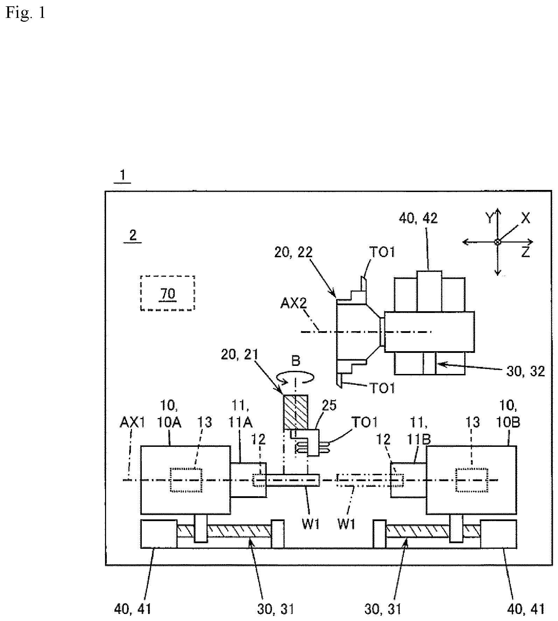

An embodiment of the present invention will be described below. Needless to mention, the following embodiment merely illustrates an example of the present invention, and not all of the features illustrated by the embodiment are essential to solving the problem of the invention.
(1) Outline of technology included in the present invention: First, referring to an example shown in FIGS. 1 to 13, an outline of the technology included in the present invention will be described. Note that since the figures of the present application are schematic diagrams illustrating examples, the magnifications of the directions shown in the figures may be different, and the figures may not be consistent. Needless to mention, the elements of the present technology are not limited to the specific examples denoted by reference symbols. Furthermore, in the present application, a numerical value range "Min to Max" denotes a range no lower than a minimum value Min and no higher than a maximum value Max.

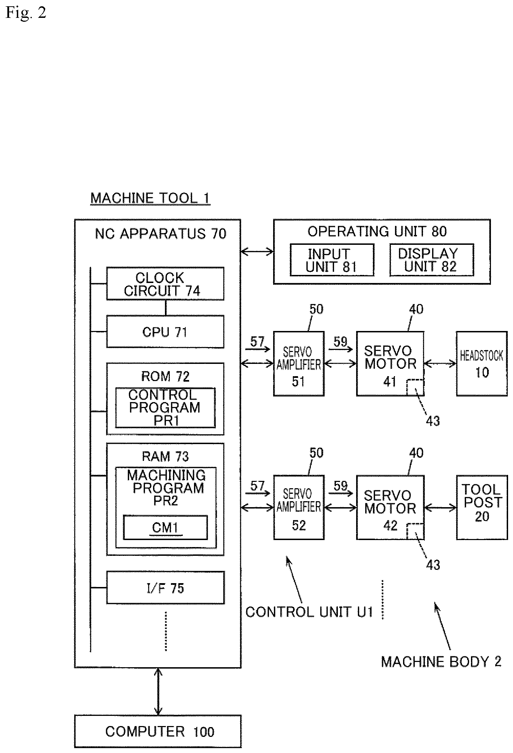

[Aspect 1] As shown in FIGS. 1 and 2, a machine tool 1 according to an aspect of the present technology is a machine tool 1 for machining a workpiece W1 using a tool TO1, and includes a guide mechanism 30, a servo motor 40, and a control unit U1. The guide mechanism 30 guides at least one drive subject from among the tool TO1 and the workpiece W1. The servo motor 40 drives the drive subject guided by the guide mechanism 30. The control unit U1 controls the servo motor 40 so as to move the drive subject from an initial position P1 to a target position P2. The control unit U1 controls the servo motor 40 so as to apply vibration Vc in which an advancing motion M1 toward the target position P2 and a retreating motion M2 opposite to the advancing motion M1 are performed repeatedly to the drive subject for a set period 202 up to a point at which the drive subject starts to move from the initial position P1 toward the target position P2.

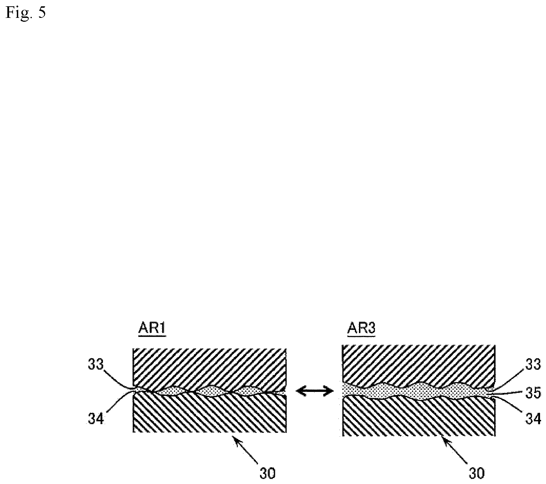

When the drive subject stops for a while, friction on guide surfaces 33 and 34 (see FIG. 5) increases due to an oil film shortage or the like. When the servo motor 40 starts to move the drive subject from the initial position P1 to the target position P2 without applying the vibration Vc to the drive subject, the servo motor 40 generates large torque in order to move the drive subject against the initial large friction. When the initial large friction acts on the guide surfaces 33 and 34 over a comparatively long distance from the start of movement, the large torque continues to be generated, and as a result, a large load acts on a drive system for driving the drive subject, for example a drive shaft of the servo motor 40. In the aspect described above, the vibration Vc is applied to the drive subject for the set period 202 up to the point at which the drive subject starts to move toward the target position P2, and since the vibration Vc causes lubricating oil 35 to spread over the guide surfaces 33 and 34 prior to the start of movement, the initial large friction is applied to the guide surfaces 33 and 34 only over a short distance corresponding to the vibration. When the lubricating oil 35 spreads over the guide surfaces 33 and 34, the friction on the guide surfaces 33 and 34 decreases, leading to a reduction in the torque generated by the servo motor 40 when starting to move the drive subject from the initial position P1 to the target position P2, and as a result, the load exerted on the drive system for driving the drive subject decreases. According to this aspect, therefore, it is possible to reduce the load exerted on the drive system for driving the drive subject when the drive subject starts to move toward the target position. As a result, deterioration of the drive system is suppressed.

Here, the machine tool includes a lathe, a machining center, and so on. The guide mechanism may guide the drive subject so that the drive subject moves in a predetermined direction, or may guide the drive subject so that the drive subject swivels about a predetermined axis. Moving the drive subject includes moving the drive subject in a commanded movement direction, swiveling the drive subject in a commanded orientation, and so on. The servo motor may move the tool as the drive subject, or move the workpiece as the drive subject, or move both the tool and the workpiece as the drive subject. When both the tool and the workpiece serve as the drive subjects, the guide mechanism guides both the tool and the workpiece. The above statements also apply to the following aspects.

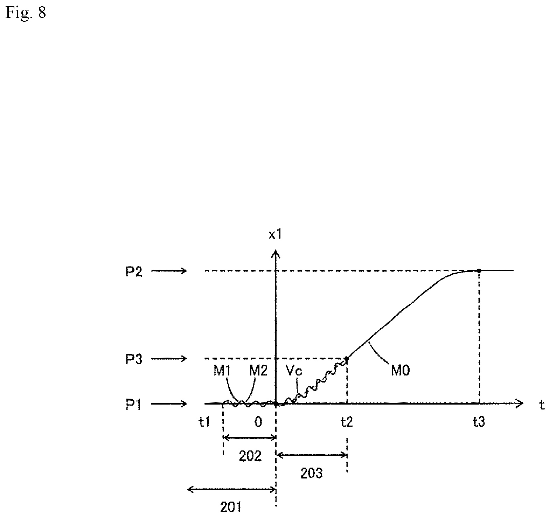

[Aspect 2] As shown in FIG. 8, the control unit U1 may also control the servo motor 40 so as to continue to apply the vibration Vc as a component to movement M0 of the drive subject from the point at which the drive subject starts to move from the initial position P1 toward the target position P2 to a midway position P3 between the initial position P1 and the target position P2. When the drive subject starts to move from the initial position P1 toward the target position P2, the oil film shortage and the like on the guide mechanism 30 may not have been sufficiently eliminated, and therefore, according to this aspect, it is possible to further reduce the load exerted on the drive system for driving the drive subject when the drive subject starts to move toward the target position.

[Aspect 3] As shown in FIG. 8, the control unit U1 may also control the servo motor 40 so as to continue to apply the vibration Vc as a component to the movement M0 of the drive subject for a second set period 203 from the point at which the drive subject starts to move from the initial position P1 toward the target position P2. When the drive subject starts to move from the initial position P1 toward the target position P2, the oil film shortage and the like on the guide mechanism 30 may not have been sufficiently eliminated, and therefore, according to this aspect, it is possible to further reduce the load exerted on the drive system for driving the drive subject when the drive subject starts to move toward the target position.

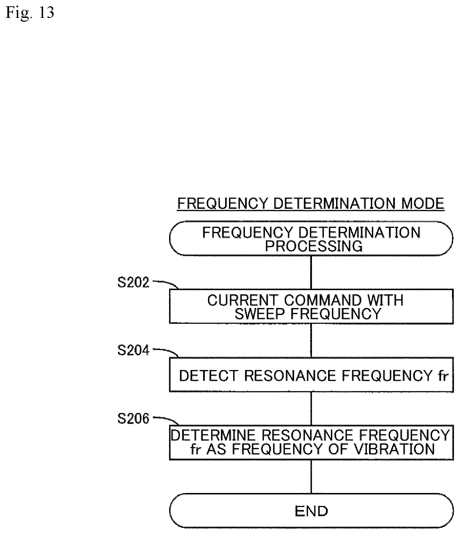

[Aspect 4] The frequency of the vibration Vc may be included in a resonance frequency band including a frequency at which resonance occurs in a part (a tool post 20 and a headstock 10, for example) of the machine tool 1 that holds the drive subject. Note that since the frequency that is measured when resonance occurs has a range, the resonance frequency band refers to a range of frequencies at which resonance may occur. A resonance frequency fr illustrated in FIG. 13 is included in the resonance frequency band. In the case described above, the vibration Vc in the resonance frequency band is applied to the drive subject for the set period 202 up to the point at which the drive subject in the initial position P1 starts to move, and therefore the lubricating oil 35 spreads over the guide surfaces 33 and 34 more easily before the drive subject starts to move. According to this aspect, therefore, it is possible to provide a favorable example of reducing the load exerted on the drive system for driving the drive subject when the drive subject starts to move toward the target position.

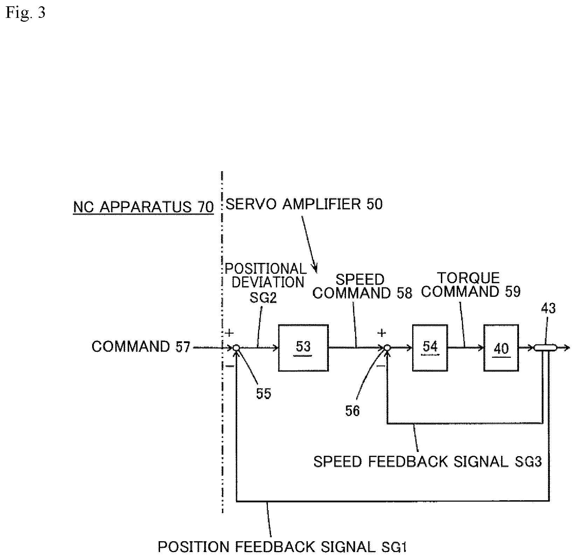

[Aspect 5] The control unit U1 may perform closed loop control (see FIG. 3, for example) on the servo motor 40 in order to move the drive subject from the initial position P1 to the target position P2. As shown in FIG. 13, in a frequency determination mode for determining the frequency of the vibration Vc, the control unit U1 may detect the resonance frequency fr generated in the part of the machine tool 1 that holds the drive subject by inputting a current command 300 having sweep frequency variation into the closed loop, and determine the detected resonance frequency fr as the frequency of the vibration Vc.

When the current command 300 having sweep frequency variation is input into the closed loop, the part of the machine tool 1 that holds the drive subject vibrates at the sweep frequency of the current command 300. When the resonance frequency fr generated in this part is detected, the detected resonance frequency fr is determined as the frequency of the vibration Vc. When the vibration Vc having the resonance frequency fr is applied to the drive subject for the set period 202 up to the point at which the drive subject in the initial position P1 starts to move, the lubricating oil 35 spreads over the guide surfaces 33 and 34 more easily before the drive subject starts to move toward the target position P2. According to this aspect, therefore, it is possible to provide a favorable example of reducing the load exerted on the drive system for driving the drive subject when the drive subject starts to move toward the target position. Here, closed loop control refers to control having a feedback loop. The closed loop may be a semi-closed loop or a fully closed loop.

(2) Specific example of configuration of machine tool: FIG. 1 schematically illustrates an example configuration of a lathe as an example of the machine tool 1. FIG. 2 schematically illustrates an example configuration of an electric circuit of the lathe as an example of the machine tool 1. The machine tool 1 shown in FIGS. 1 and 2 is a numerical control (NC) automatic lathe having an NC apparatus 70 that numerically controls machining of the workpiece W1, which is gripped by a spindle 11. A computer 100 is not an essential element of the machine tool 1, and therefore, in certain cases, the external computer 100 may not be connected to a machine body 2.

The machine tool 1 shown in FIG. 1 is an NC machine tool including the headstock 10, into which the spindle 11 is incorporated, the tool post 20 that directly or indirectly holds the tool TO1, the guide mechanism 30 for guiding the headstock 10 or the tool post 20, the servo motor 40, the NC apparatus 70, and so on. Here, the headstock 10 collectively refers to a front headstock 10A and a back headstock 10B, which is also known as an opposite headstock. The spindle 11 collectively refers to a front spindle 11A and a back spindle 11B, which is also known as an opposite spindle. The headstock 10 shown in FIG. 1 is provided with a motor 13, for example a built-in motor, for rotating the spindle 11 about a spindle axis AX1 The spindle 11 shown in FIG. 1 includes a gripping unit 12 such as a collet. The tool post 20 collectively refers to a gang-type tool post 21 and a turret tool post 22. The gang-type tool post 21 shown in FIG. 1 is provided with a swiveling unit 25 into which a plurality of the tools TO1 are incorporated. The guide mechanism 30 collectively refers to a guide mechanism 31 for guiding the headstock 10 and a guide mechanism 32 for guiding the tool post 20. The guide mechanism 32 includes a swiveling guide mechanism for guiding swiveling of the swiveling unit 25. The servo motor 40 collectively refers to a servo motor 41 for moving the headstock 10 and a servo motor 42 for moving the tool TO1. The servo motor 42 includes not only a servo motor for moving the tool post 20 but also a servo motor for swiveling the swiveling unit 25.

Control axes of the machine tool 1 shown in FIG. 1 include an X-axis, indicated by "X", a Y-axis, indicated by "Y", a Z-axis, indicated by "Z", and a B-axis, indicated by "B". A Z-axis direction is a horizontal direction extending along the spindle axis AX1 that serves as the rotation center of the workpiece W1. An X-axis direction is a horizontal direction orthogonal to the Z-axis. A Y-axis direction is a vertical direction orthogonal to the Z-axis. The B-axis is a reference axis for controlling the rotation angle of the swiveling unit 25, for example a vertically oriented control axis extending along the Y-axis. Note that as long as the Z-axis and the X-axis intersect, these two axes need not be orthogonal, as long as the Z-axis and Y-axis intersect, these two axes need not be orthogonal, and as long as the X-axis and the Y-axis intersect, these two axes need not be orthogonal. Furthermore, the figures referred to in the present specification merely illustrate examples used to describe the present technology, and the present technology is not limited thereby. Moreover, descriptions of positional relationships between respective parts are merely examples. Accordingly, the present technology also includes examples in which left and right are reversed, the rotation direction is reversed, and so on. Furthermore, equality of directions, positions, and so on is not limited to strict coincidence and includes deviation from strict coincidence due to errors.

The machine tool 1 shown in FIG. 1 is a moving spindle-type lathe in which the front headstock 10A and the back headstock 10B both move in the Z-axis direction. The guide mechanism 31 guides the headstock 10 along the Z-axis. When the gripping unit 12 grips the workpiece W1, the guide mechanism 31 guides the workpiece W1 along the Z-axis. Note that the machine tool 1 may be a fixed spindle-type lathe in which the front headstock 10A does not move, or a machine tool in which the front headstock 10A moves in the Z-axis direction but the back headstock 10B does not move. Needless to mention, the headstock 10 may also move in the X-axis direction and so on. The spindle 11 uses the gripping unit 12 to grip the workpiece W1 in a releasable manner. The motor 13 rotates the spindle 11 together with the workpiece W1 about the spindle axis AX1. When the workpiece W1 prior to machining is a long, cylindrical (rod-shaped) material, for example, the workpiece W1 may be supplied to the gripping unit 12 from a rear end (the left end in FIG. 1) of the front spindle 11A. In this case, a guide bush for supporting the workpiece W1 so as to be capable of sliding in the Z-axis direction may be disposed on a front side (the right side in FIG. 1) of the front spindle 11A. When the workpiece W1 prior to machining is a short material, the workpiece W1 may be supplied to the gripping unit 12 from a front end of the front spindle 11A. Following front machining, the workpiece W1 is passed from the front spindle 11A to the back spindle 11B and back-machined so as to form a product.

The tool post 20 is capable of moving in the X-axis direction and the Y-axis direction with the plurality of tools TO1 for machining the workpiece W1 directly or indirectly attached thereto. The guide mechanism 32 guides the tool post 20 together with the tools TO1 along the X-axis and the Y-axis. Needless to mention, the tool post 20 may also move in the Z-axis direction. The plurality of tools TO1 include a cutting tool having a cut-off tool, rotary tools such as a rotary drill and an endmill, and so on. The swiveling unit 25 provided on the gang-type tool post 21 is capable of swiveling about the B-axis together with the tools TO1. The gang-type tool post 21 may also be said to include the guide mechanism 32 for guiding the swiveling unit 25 about the B-axis together with the tools TO1. The turret tool post 22 indexes the tools TO1 by swiveling about a swiveling axis AX2 extending along the Z-axis. A rolling guide mechanism such as a ball screw or a linear guide, a sliding guide mechanism such as a combination of a dovetail and a dovetail groove, and so on may be used as the guide mechanism 30.

As shown in FIG. 2, an operating unit 80, the servo amplifier 50, a rotary driving unit (not shown) for the spindle 11, a driving unit (not shown) for the gripping unit 12, and so on are connected to the NC apparatus 70. Here, the servo amplifier 50 collectively refers to a servo amplifier 51 for the headstock 10 and a servo amplifier 52 for the tool post 20. The servo amplifier 50 and the NC apparatus 70 are examples of the control unit U1. The servo motor 40, which has an encoder 43 in the interior thereof, is connected to the servo amplifier 50. The NC apparatus 70 includes a central processing unit (CPU) 71 serving as a processor, a read only memory (ROM) 72 constituted by a semiconductor memory, a random access memory (RAM) 73 constituted by a semiconductor memory, a clock circuit 74, an interface (I/F) 75, and so on. Thus, the NC apparatus 70 is a type of computer. In FIG. 2, I/Fs of the operating unit 80, the servo amplifier 50, the external computer 100, and so on are illustrated collectively as the I/F 75.

A control program PR1 for interpreting and executing a machining program PR2 including a plurality of commands CM1, and so on are written to the ROM 72. The ROM 72 may be a data-rewritable semiconductor memory. The machining program PR2, which has been created by an operator, is stored rewritably in the RAM 73. The machining program is also known as an NC program. The CPU 71 executes the control program PR1 recorded in the ROM 72 using the RAM 73 as a work area, and thus realizes the functions of the NC apparatus 70. Needless to mention, some or all of the functions realized by the control program PR1 may be realized by other means such as an application specific integrated circuit (ASIC).

The operating unit 80 includes an input unit 81 and a display unit 82, and functions as a user interface of the NC apparatus 70. The input unit 81 is constituted by, for example, a button or a touch panel for receiving operation input from the operator. The display unit 82 is constituted by, for example, a display that displays the content of various settings for which operation input is received from the operator, and various information relating to the machine tool 1. The operator can store the machining program PR2 in the RAM 73 using the operating unit 80 or the computer 100.

The servo amplifier 51 controls the position and movement speed of the headstock 10 together with the workpiece W1 serving as the drive subject in accordance with a command 57 from the NC apparatus 70. The servo motor 41, which is controlled by the servo amplifier 51, rotates in accordance with a torque command 59 from the servo amplifier 51 so as to move the headstock 10 together with the workpiece W1 via the guide mechanism 31. For example, when the headstock 10 is the front headstock 10A that is capable of moving along the Z-axis, the servo amplifier 51 controls the position and movement speed of the front headstock 10A in the Z-axis direction in accordance with the command 57 from the NC apparatus 70. The servo motor 41 moves the front headstock 10A in the Z-axis direction via the guide mechanism 31 in accordance with the torque command 59 from the servo amplifier 51.

The servo amplifier 52 controls the position and movement speed of the tool post 20 together with the tool TO1 serving as the drive subject in accordance with the command 57 from the NC apparatus 70. The servo motor 42, which is controlled by the servo amplifier 52, rotates in accordance with the torque command 59 from the servo amplifier 52 so as to move the tool post 20 together with the tool TO1 via the guide mechanism 32. For example, when the tool post 20 is the gang-type tool post 21 that is capable of moving along the X-axis and the Y-axis, the X-axis servo amplifier 52 controls the position and movement speed of the gang-type tool post 21 in the X-axis direction in accordance with the command 57 from the NC apparatus 70, and the Y-axis servo amplifier 52 controls the position and movement speed of the gang-type tool post 21 in the Y-axis direction in accordance with the command 57 from the NC apparatus 70. The X-axis servo motor 42 moves the gang-type tool post 21 in the X-axis direction via the guide mechanism 32 in accordance with the torque command 59 from the servo amplifier 52, and the Y-axis servo motor 42 moves the gang-type tool post 21 in the Y-axis direction via the guide mechanism 32 in accordance with the torque command 59 from the servo amplifier 52. Furthermore, the B-axis servo amplifier 52 controls the position and rotation speed of the swiveling unit 25 together with the tool TO1 serving as the drive subject in accordance with the command 57 from the NC apparatus 70. The B-axis servo motor 42 rotates in accordance with the torque command 59 from the servo amplifier 52 so as to swivel the swiveling unit 25 together with the tool TO1 via the guide mechanism 32.

FIG. 3 schematically illustrates a control system for a semi-closed loop. The semi-closed loop control system includes a loop for feeding back a position detected by the encoder 43 provided in the servo motor 40. Since the encoder 43 is located inside the servo motor 40, a position acquired by detecting the actual position of the drive subject is not fed back by the semi-closed loop control system. The control system shown in FIG. 3 is provided for each of the Z-axis movement of the front headstock 10A, the Z-axis movement of the back headstock 10B, the X-axis movement of the gang-type tool post 21, the Y-axis movement of the gang-type tool post 21, the B-axis swiveling of the swiveling unit 25, the X-axis movement of the turret tool post 22, the Y-axis movement of the turret tool post 22, and so on.

The NC apparatus 70 can output the command 57 to the servo amplifier 50. When the command 57 is a position command relating to the drive subject (the tool TO1 or the workpiece W1), a subtraction unit 55 of the servo amplifier 50 receives the position command input from the NC apparatus 70, receives a position feedback signal SG1 input therein on the basis of output from the encoder 43 of the servo motor 40, and outputs a positional deviation SG2 to a position gain 53. The positional deviation SG2 is a difference signal between the position command relating to the drive subject and the position feedback signal SG1. The position gain 53 receives the positional deviation SG2 input from the subtraction unit 55, and on the basis of the positional deviation SG2 outputs a speed command 58 to a subtraction unit 56. The subtraction unit 56 receives the speed command 58 input from the position gain 53, receives a speed feedback signal SG3 input therein on the basis of the output from the encoder 43, corrects the speed command 58 on the basis of the speed feedback signal SG3, and inputs the corrected speed command 58 into a speed gain 54. The speed gain 54 receives the corrected speed command input from the subtraction unit 56, and on the basis of the corrected speed command outputs the torque command 59 to the servo motor 40. The torque of the servo motor 40 is commensurate with a current flowing through the servo motor 40, and therefore the torque command 59 corresponds to a current value flowing through the servo motor 40.

Thus, the NC apparatus 70 and the servo amplifier 50 perform semi-closed loop control on the servo motor 40 so as to move the drive subject from the initial position to the target position in response to the command CM1 to move the drive subject. For example, when the command CM1 is a fast feed command for moving the tool TO1 along the X-axis, the NC apparatus 70 and the servo amplifier 52 for the tool perform semi-closed loop control on the servo motor 42 so as to move the tool TO1 along the X-axis in a straight line from the initial position to the target position. Note that a fast feed command differs from a cutting feed command, according to which the workpiece W1 is cut, in being a command for moving the tool TO1 without cutting the workpiece W1. The command CM1 may be a command for moving the tool TO1 along a plurality of axes, for example the X-axis and the Y-axis. When the command CM1 is a fast feed command for swiveling the tool TO1 about the B-axis, the NC apparatus 70 and the servo amplifier 52 perform semi-closed loop control on the servo motor 42 so as to swivel the tool TO1 about the B-axis from an initial position to a target position. When the command CM1 is a command for moving the workpiece W1 along the Z-axis, the NC apparatus 70 and the servo amplifier 51 for the headstock perform semi-closed loop control on the servo motor 41 so as to move the workpiece W1 along the Z-axis in a straight line from the initial position to the target position.

Moreover, the NC apparatus 70 can output a current command serving as a command value relating to current control to the servo amplifier 50 as the command 57. The current command denotes an input value that has not received current control feedback, while the torque command 59 input into the servo amplifier 50 denotes an output value that has received current control feedback. When there are no feedback signals (SG1, SG3), the torque command 59 serves as the current command. Furthermore, the servo amplifier 50 can output a torque value corresponding to the torque command 59 to the NC apparatus 70. The torque value corresponds to the current value flowing through the servo motor 40. The NC apparatus 70 can output to the servo amplifier 50 a torque value acquisition command for acquiring the torque value from the servo amplifier 50. Having received the torque value acquisition command, the servo amplifier 50 outputs the torque value to the NC apparatus 70.

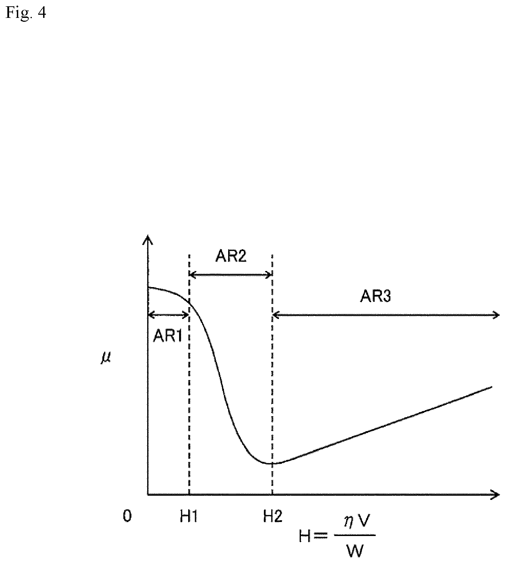

Since friction is generated by the guide surfaces of the guide mechanism 30, a sealing O ring, and so on, lubricating oil is supplied to the guide surfaces of the guide mechanism 30 and so on. In sliding guidance performed by a combination of a dovetail and a dovetail groove or the like, or rolling guidance performed by a ball screw, a linear guide, or the like, a Stribeck curve relationship, an example of which is shown in FIG. 4, is known. As shown in FIG. 4, a Stribeck curve shows a relationship between a parameter H = ηV/W and a friction coefficient µ. Here, η is the viscosity of the lubricating oil, V is the speed of a moving body, and W is a load applied between the guide surfaces. The moving body corresponds to a dovetail or the like that is capable of moving along a fixed dovetail groove. The friction between the guide surfaces may be said to increase as the friction coefficient µ increases. The Stribeck curve is divided into a boundary lubrication region AR1, a mixed lubrication region AR2, and a liquid lubrication region AR3 in accordance with the parameter H. FIG. 4 shows that the parameter H on a boundary between the boundary lubrication region AR1 and the mixed lubrication region AR2 is H1 (H1 > 0), and the parameter H on a boundary between the mixed lubrication region AR2 and the liquid lubrication region AR3 is H2 (H2 > H1).

FIG. 5 schematically illustrates examples of lubrication states of the guide surfaces. As shown in FIG. 5, the lubricating oil 35 is supplied between the guide surfaces 33 and 34. Here, the guide surface 33 is a guide surface for a moving body such as a dovetail, and the guide surface 34 is a guide surface for a fixed body such as a dovetail groove. The moving body and the fixed body are typically formed from metal, and although the guide surfaces 33 and 34 are formed to be macroscopically smooth, the guide surfaces 33 and 34 include microscopic irregularities.

In the boundary lubrication region AR1 shown in FIGS. 4 and 5, a lubrication state in which the oil film between the guide surfaces 33 and 34 is thin such that the guide surfaces 33 and 34 contact each other in many locations is established. Since there are many contact locations, it may be said that there is an "oil film shortage" between the guide surfaces 33 and 34 in the boundary lubrication region AR1. Accordingly, the friction coefficient µ in the boundary lubrication region AR1 is large. When the guide surface 33 for the moving body starts to move, the parameter H increases such that the boundary lubrication region AR1 shifts to the mixed lubrication region AR2. In the mixed lubrication region AR2, a lubrication state in which the amount of lubricating oil 35 between the guide surfaces 33 and 34 increases such that the number of contact locations decreases, although some contact locations remain, is established. Hence, the friction coefficient µ in the mixed lubrication region AR2 generally decreases as the parameter H increases. When the speed V of the moving body increases, the parameter H further increases such that the mixed lubrication region AR2 shifts to the liquid lubrication region AR3. In the liquid lubrication region AR3 shown in FIGS. 4 and 5, a lubrication state in which the amount of lubricating oil 35 between the guide surfaces 33 and 34 further increases such that the contact locations are eliminated by the oil film is established.

Thus, when the drive subject stops for a while, the gap between the guide surfaces 33 and 34 enters the boundary lubrication region AR1, which may also be referred to as an oil film shortage, leading to an increase in the friction between the guide surfaces 33 and 34. When the servo motor 40 starts to move the drive subject toward the target position without applying vibration to the drive subject, the servo motor 40 generates large torque in order to move the drive subject against the large friction in the boundary lubrication region AR1. When the large friction of the boundary lubrication region AR1 acts on the guide surfaces 33 and 34 over a comparatively long distance from the start of movement of the drive subject, the large torque continues to be generated, and as a result, a large load is exerted on the drive system for driving the drive subject, for example the drive shaft of the servo motor 40. When a large load is exerted on the drive system, the drive system may break. The friction in the boundary lubrication region AR1 is particularly large when the guide mechanism 30 is a sliding guide mechanism such as a combination of a dovetail and a dovetail groove, and in this case a large load is more likely to act on the drive system. Furthermore, when the command CM1 is a fast feed command by which the workpiece W1 is not cut, the drive subject moves at high speed, and therefore a large load is more likely to act on the drive system.

In this specific example, the lubricating oil 35 is caused to enter the gap between the guide surfaces 33 and 34 by applying micro-vibration to the drive subject before the drive subject starts to move toward the target position, and in so doing the gap between the guide surfaces 33 and 34 is caused to shift from the boundary lubrication region AR1 to the mixed lubrication region AR2. Thus, the load that acts on the drive system for driving the drive subj ect when the drive subject starts to move toward the target position is reduced, and as a result, deterioration of the drive system is suppressed.

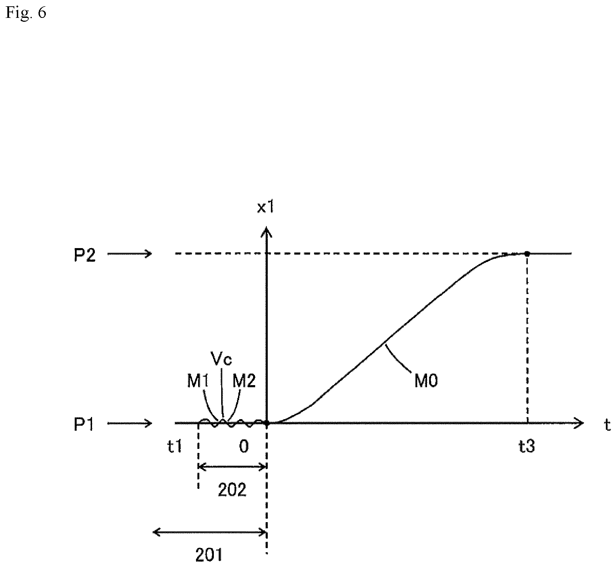

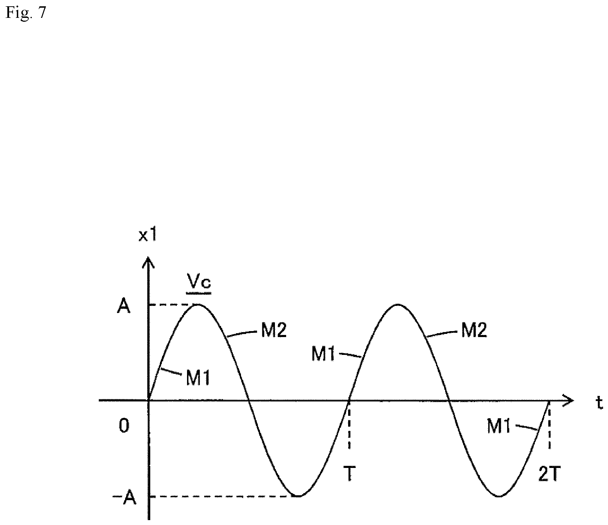

FIG. 6 schematically illustrates the manner in which the vibration Vc is applied to the drive subject for the set period 202 up to the point at which the drive subject starts to move from the initial position P1 toward the target position P2. FIG. 7 schematically illustrates the vibration Vc. In FIGS. 6 and 7, the horizontal axis shows time t and the vertical axis shows a control position x1 of the drive subject. FIG. 6 shows that at t = 0, control is performed to start moving the drive subject from the initial position P1, and when the time t reaches a movement stop timing t3, control for stopping the drive subject in the target position P2 is performed. t=0 in FIG. 7 differs from t=0 in FIG. 6. The control position x1 is the control position of the semi-closed loop after receiving the feedback signals (SG1, SG3) based on the output of the encoder 43, shown in FIG. 3. For example, when the tool TO1 moves in a straight line along the X-axis, the control position x1 indicates the control position of the tool TO1 (specifically, a cutting edge) along the X-axis.

The command CM1 is assumed to be a fast feed command for moving the tool TO1 from the initial position P1 to the target position P2. In this case, the servo amplifier 52 for the tool performs semi-closed loop control on the servo motor 42 in order to move the tool TO1 from the initial position P1 to the target position P2. The servo amplifier 52 of this specific example controls the servo motor 42 so as to apply the vibration Vc, in which the advancing motion M1 toward the target position P2 and the retreating motion M2 opposite to the advancing motion M1 are performed repeatedly, to the tool TO1 for the set period 202 up to the point at which the tool TO1 starts to move from the initial position P1 toward the target position P2. The set period 202 refers to a period from a set vibration start timing t1 to the timing t=0 at which the drive subject starts to move toward the target position P2, and is connected to a period in which the drive subject moves from the initial position P1 toward the target position P2. The set period 202 is shorter than a stop period 201 in which the drive subject stops in the initial position P1. The set period 202 is 1 to 10,000 milliseconds or the like, but there are no particular limitations thereon.

As shown in FIG. 6, the vibration Vc is not applied to the movement of the tool TO1 (the movement M0 of the drive subject) from the initial position P1 to the target position P2, but the vibration Vc is applied to the tool TO1 before the tool TO1 starts to move toward the target position P2. As a result of the vibration Vc, the lubricating oil 35 enters the gap between the guide surfaces 33 and 34 before the tool TO1 starts to move toward the target position P2, thereby causing the gap between the guide surfaces 33 and 34 to shift from the boundary lubrication region AR1 to the mixed lubrication region AR2. Note that although the large friction of the boundary lubrication region AR1 is applied to the guide surfaces 33 and 34 during the vibration, the large friction is applied to the guide surfaces 33 and 34 only over a short distance corresponding to the vibration. The servo motor 42 starts to move the tool TO1 from the initial position P1 toward the target position P2 after the friction on the guide surfaces 33 and 34 has decreased, and therefore the torque generated by the servo motor 42 decreases. Thus, the load acting on the drive system for driving the tool TO1 decreases, and as a result, deterioration of the drive system is suppressed. The vibration Vc may also be said to be micro-vibration for reducing the friction generated in the guide mechanism 30 before the drive subject starts to move from the initial position P1 toward the target position P2. Moreover, since the vibration Vc is not applied to the movement of the tool TO1 from the initial position P1 to the target position P2, power consumption is suppressed. Note that the same may be said with respect to the B-axis swiveling of the swiveling unit 25, the Z-axis movement of the workpiece W1, and so on.

The vibration Vc shown in FIG. 7 is a sine wave having a period of T and an amplitude of A. Accordingly, within t=0 to T, the tool TO1 performs the advancing motion M1 from 0 to (1/4)T and from (3/4)T to T, and the tool TO1 performs the retreating motion M2 from (1/4)T to (3/4)T. Note that the vibration Vc is not limited to a sine wave and may also be a triangular wave, a rectangular wave, or the like. Triangular waves and rectangular waves include harmonic components, and it is therefore assumed that the lubricating oil 35 enters the gap between the guide surfaces 33 and 34 more easily. The NC apparatus 70 can output the amplitude A and the frequency (denoted as f) of the vibration Vc to the servo amplifier 50 as arguments. The servo amplifier 50, having received the amplitude A and the frequency f, performs semi-closed loop control so as to apply the vibration Vc having the amplitude A and the frequency f to the drive subject.

The amplitude A of the vibration Vc, which corresponds to the control position x1, is preferably 1 to 100 µm. When the amplitude A is equal to or larger than 1 µm, the drive subject actually vibrates against the friction between the guide surfaces 33 and 34, thereby facilitating entry of the lubricating oil 35 into the gap between the guide surfaces 33 and 34. When the amplitude A is equal to or smaller than 100 µm, the distance, corresponding to the vibration, by which the guide surface 33 for the moving body moves against the large friction of the boundary lubrication region AR1 during the vibration is prevented from becoming excessive. By setting the amplitude A at or below 100 µm, the vibration Vc serving as the control position x1 may be considered as micro-vibration, and the vibration that actually occurs may be said to be micro-vibration. The frequency f = 1/T of the vibration Vc is preferably 1 to 1000 Hz. By setting the frequency f to be equal to or larger than 1 Hz, the number of vibrations in the set period 202 increases, making it easier for the lubricating oil 35 to enter the gap between the guide surfaces 33 and 34. By setting the frequency f to be equal to or smaller than 1000 Hz, the vibration of the drive subject is more likely to follow the control, making it easier for the lubricating oil 35 to enter the gap between the guide surfaces 33 and 34.

As shown in FIG. 8, the servo amplifier 50 may control the servo motor 40 so as to continue to apply the vibration Vc as a component to the movement M0 of the drive subject from the point at which the drive subject starts to move from the initial position P1 toward the target position P2 up to a midway position P3 between the initial position P1 and the target position P2. The midway position P3 may be a position a predetermined distance from the initial position P1, a position at which the rotation speed of the servo motor 40 reaches or exceeds a predetermined rotation speed, a position set at a timing a predetermined period after t=0, and so on. A period from the timing t=0 to a vibration stop timing t2 indicates a period in which the vibration Vc continues to be applied following the set period 202, and this period is shorter than a period from the timing t=0 to a movement stop timing t3. The period from the timing t=0 to the vibration stop timing t2 is 1 to 1000 milliseconds or the like, but there are no particular limitations thereon. When the drive subject starts to move from the initial position P1 toward the target position P2, the lubricating oil 35 may not have sufficiently entered the gap between the guide surfaces 33 and 34. In this case, by continuing to apply the vibration Vc, the lubricating oil 35 further enters the gap between the guide surfaces 33 and 34 so that the load acting on the drive system for moving the drive subject when the drive subject starts to move toward the target position P2 decreases further.

Here, a period from the timing t=0 to the vibration stop timing t2 is set as the second set period 203. The servo amplifier 50 may also control the servo motor 40 so as to continue to apply the vibration Vc as a component to the movement M0 of the drive subject for the second set period 203 from the point at which the drive subject starts to move from the initial position P1 toward the target position P2. The second set period 203 may be a predetermined period set initially in the machine body 2, a period specified by the operator, or the like. The second set period 203 may be specified as a specified period in the machining program PR2. When the second set period 203 is specified, the NC apparatus 70 can transmit the second set period 203 to the servo amplifier 50. The servo amplifier 50 can then control the servo motor 40 so as to apply the vibration Vc as a component to the movement M0 of the drive subject for the second set period 203 received from the NC apparatus 70.

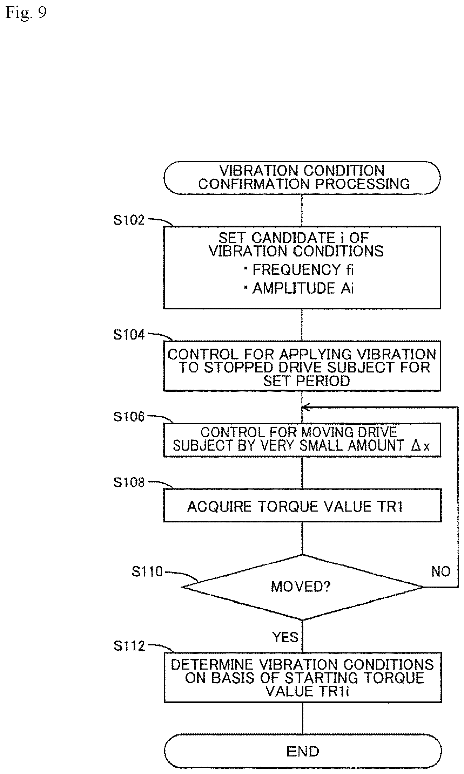

Furthermore, in order to minimize the load acting on the drive system for moving the drive subject, the vibration Vc may be applied to the stopped drive subject after changing the vibration conditions, including the frequency f and the amplitude A, and vibration conditions at which the friction between the guide surfaces 33 and 34 is minimized may be retrieved. The friction between the guide surfaces 33 and 34 corresponds to a starting torque, which is the torque generated when the stopped drive subject starts to move. Accordingly, as shown in FIG. 9, a candidate i of the vibration conditions of the vibration Vc may be set, the vibration Vc may be applied to the drive subject under the set candidate i of the vibration conditions, and it may then be confirmed that the detected starting torque is lower than a reference torque. The machine tool 1 shown in FIG. 2 has, in addition to a machining mode for machining the workpiece W1 using the tool TO1 in accordance with the machining program PR2, a manual mode in which vibration condition confirmation processing shown in FIG. 9 can be executed.

FIG. 9 schematically illustrates the vibration condition confirmation processing performed by the NC apparatus 70 in the manual mode. The NC apparatus 70 starts the vibration condition confirmation processing when the operating unit 80 receives an operation for detecting the starting torque in the manual mode. The vibration condition confirmation processing will be described below, using movement of the tool TO1 as an example. Whether or not the tool TO1 has actually moved can be determined by, for example, placing a probe of a dial gauge on the tool post 20 on which the tool TO1 is provided and determining whether or not the needle of the dial gauge has moved.

When the vibration condition confirmation processing starts, the NC apparatus 70 sets the candidate i of the vibration conditions of the vibration Vc (step S102). The vibration condition candidate i is a combination of a frequency fi and an amplitude Ai, for example. The waveform, such as a triangular wave or a rectangular wave, the set period 202 shown in FIG. 6, and so on may also be included in the factors of the candidate i. The candidate i may be set from among a plurality of vibration condition candidates i. Next, the NC apparatus 70 causes the servo amplifier 52 for the tool to execute semi-closed loop control so as to apply vibration corresponding to the candidate i to the tool TO1 stopped in the initial position P1 for the set period 202 (step S104). After stopping the vibration corresponding to the candidate i, the NC apparatus 70 causes the servo amplifier 52 to execute semi-closed loop control so as to move the tool TO1 by a very small amount ΔX (step S106). The NC apparatus 70 immediately acquires a torque value TR1 from the servo amplifier 52 (step S108). Next, the NC apparatus 70 causes the operating unit 80 to receive an operation indicating whether or not the tool TO1 has actually moved, and determines whether or not the tool TO 1 has actually moved (step S110).

When the tool TO1 has not moved, the NC apparatus 70 performs the processing of steps S106 to S110 again. Accordingly, the movement amount of the tool TO1, which corresponds to the control position x1, is a distance obtained by multiplying the very small amount ΔX by the number of times step S106 is executed. When the tool TO1 has actually moved, the NC apparatus 70 sets the most recently acquired torque value TR1 as a starting torque value TR1i, determines, on the basis of the starting torque value TR1i, whether or not the candidate i can be applied to the vibration conditions of the vibration Vc (step S 112), and then terminates the vibration condition confirmation processing. For example, the NC apparatus 70 can determine that the candidate i can be applied to the vibration conditions of the vibration Vc when the starting torque value TR1i is lower than a reference torque value, and that the candidate i cannot be applied to the vibration conditions of the vibration Vc in all other cases. In step S 112, the NC apparatus 70 may display the determination result on the display unit 82, and may set the candidate i as the vibration conditions of the vibration Vc only after determining that the candidate i can be applied to the vibration conditions of the vibration Vc.

The vibration conditions of the vibration Vc are retrieved by performing the vibration condition confirmation processing on the plurality of candidates i, and thus the vibration conditions of the vibration Vc are set so as to minimize the starting torque. The vibration conditions may be retrieved within guidelines of 1 to 100 µm for the amplitude A and 1 to 1000 Hz for the frequency f. When, for example, the vibration conditions are stored in the ROM 72 shown in FIG. 2, the NC apparatus 70 can output the vibration conditions stored in the ROM 72 to the servo amplifier 50 as arguments. Thus, the vibration Vc is applied to the tool TO1 so as to minimize the load exerted on the drive system for moving the drive subject when the tool TO1 starts to move toward the target position. Needless to mention, the load exerted on the drive system when the drive subject starts to move toward the target position can be reduced in the machining mode by a similar action likewise with respect to the B-axis swiveling of the swiveling unit 25, the Z-axis movement of the workpiece W1, and so on.

The frequency of the vibration Vc may be included in a resonance frequency band in which resonance can occur in the part of the machine tool 1 that holds the drive subject. When the drive subject is the tool TO1, at least the tool post 20 may be included in the part that holds the drive subject, and at least a part of the guide mechanism 32 may be included as the part in which resonance occurs. When the drive subject is the workpiece W1, at least the headstock 10 may be included in the part that holds the drive subject, and at least a part of the guide mechanism 31 may be included as the part in which resonance occurs. The resonance frequency (denoted as fr) occurring in the part that holds the drive subject is measured by a hammering test before the machine tool 1 is shipped, for example, and written to the ROM 72. The measured resonance frequency fr has a range, and therefore, assuming that the range is ±Δf (Δf > 0), the resonance frequency band refers to a range of frequencies in which resonance may occur, such as (fr - Δf) to (fr + Δf).

When the frequency of the vibration Vc is included in the resonance frequency band, structures from the servo motor 40 to the drive subject are vibrated comparatively strongly by the vibration Vc in the resonance frequency band, which is applied to the drive subject in the initial position P1. Note that since the amplitude A of the vibration Vc is small, being approximately 1 to 100 µm, and since the vibration Vc is applied to the drive subject only until the drive subject starts to move or only up to the midway position P3, a reduction in the positional accuracy of the drive subject due to the resonance occurring in the part that holds the drive subject is suppressed. More specifically, when the command CM1 is a fast feed command by which the workpiece W1 is not cut, resonance does not lead to a reduction in the positional accuracy of the drive subject. Since the structures are vibrated comparatively strongly, the lubricating oil 35 spreads more easily over the guide surfaces 33 and 34 before the drive subject starts to move. Hence, when the frequency of the vibration Vc is included in the resonance frequency band, the load exerted on the drive system for driving the drive subject when the drive subject starts to move toward the target position P2 can be effectively reduced.

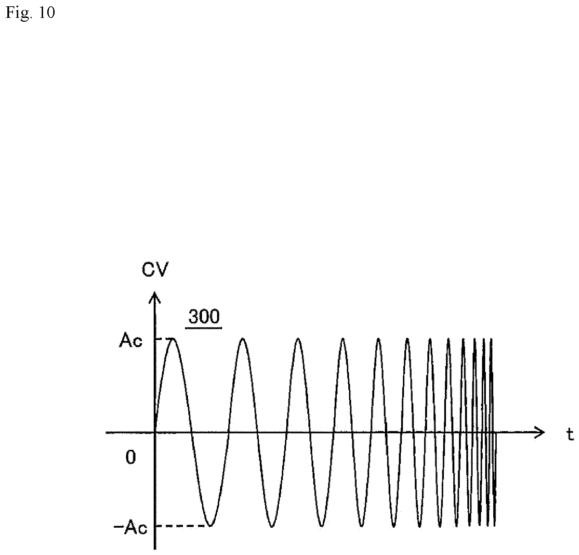

The machine tool 1 shown in FIG. 2 may have a frequency determination mode for determining the frequency of the vibration Vc in addition to the machining mode and so on, and may determine the frequency of the vibration Vc as a frequency in the resonance frequency band in the frequency determination mode. The resonance frequencies fr included in the resonance frequency band can be measured by inputting the current command 300 having sweep frequency variation, an example of which is shown in FIG. 10, into the servo amplifier 50. In FIG. 10, the horizontal axis shows the time t, and the vertical axis shows a command value CV The NC apparatus 70 can output the current command 300 to the servo amplifier 50 as the command 57 shown in FIG. 3. The sweep frequency is a frequency that changes continuously from a start frequency to a stop frequency, and FIG. 10 shows a sweep frequency in which the frequency increases continuously. An amplitude Ac of the current command 300 remains constant, regardless of the frequency.

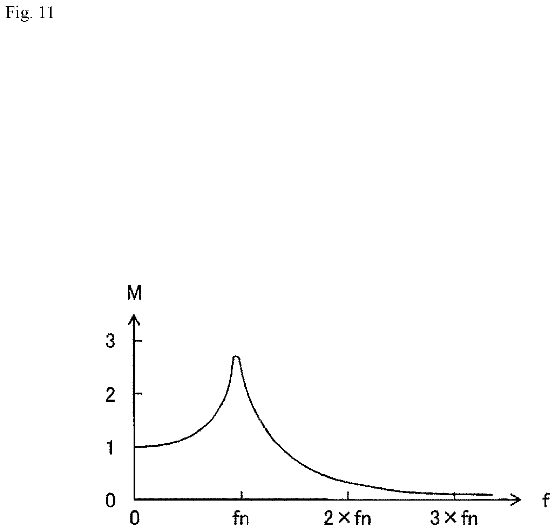

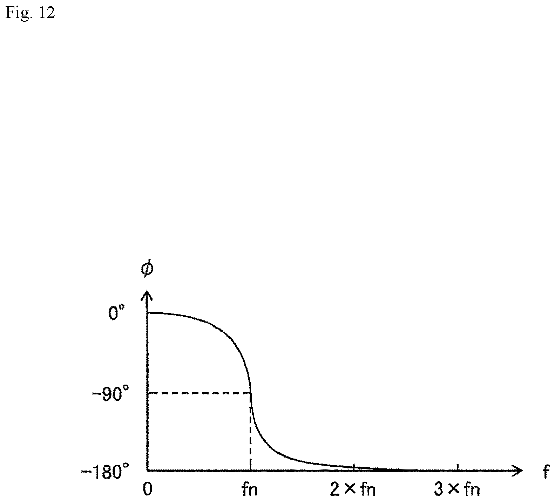

FIG. 11 schematically illustrates an example of an amplitude magnification M of the vibration relative to the frequency f in a case where external force for causing a mass point of a vibration system to vibrate is applied to the mass point. The amplitude magnification M is a ratio of the amplitude of the output vibration to the amplitude of the external force. FIG. 12 schematically illustrates an example of a phase delay ϕ of the output vibration relative to the frequency f in a case where external force for causing the mass point of the vibration system to vibrate is applied thereto. The phase delay ϕ is a phase difference between the external force and the output vibration, and using the phase of the external force as a reference, the delay of the phase of the output vibration is indicated by a negative value. Note that the mass point corresponds to the part of the machine tool 1 that holds the drive subject, the external force corresponds to the current command 300 input into the servo amplifier 50, and the output vibration corresponds to the torque command 59 that has received feedback. Accordingly, the amplitude magnification M corresponds to a ratio of the amplitude of the torque command 59 to the amplitude Ac of the current command 300.

As shown in FIG. 11, the amplitude magnification M reaches a peak near a natural frequency fn of the mass point. The reason for this is that resonance occurs. The peak of the amplitude magnification M is dependent on a damping ratio of the vibration system, and therefore decreases as the damping ratio increases. As shown in FIG. 12, the phase delay ϕ of the output vibration relative to the frequency f is larger than -90° when f < fn, -90° when f = fn, and smaller than -90° and larger than -180° when f > fn. Thus, when the current command 300 having sweep frequency variation is input into the servo amplifier 50, the frequency at the point where the phase delay ϕ of the torque command 59 that causes vibration after receiving feedback reaches -90° becomes the resonance frequency fr. Accordingly, the resonance frequency fr may be determined as the frequency of the vibration Vc in the vibration condition determination mode.

FIG. 13 schematically illustrates frequency determination processing performed by the NC apparatus 70 in the frequency determination mode. The NC apparatus 70 starts the frequency determination processing when the operating unit 80 receives an operation for determining the frequency of the vibration Vc in the frequency determination mode. The frequency determination processing will be described below, using movement of the tool TO1 as an example.

When the frequency determination processing starts, the NC apparatus 70 outputs the current command 300 having sweep frequency variation, in which the sweep frequency varies continuously from the start frequency to the stop frequency, to the servo amplifier 52 as the command 57 shown in FIG. 3 (step S202). The servo amplifier 52 inputs the current command 300 into the semi-closed loop, detects the phase delay ϕ of the torque command 59 that causes vibration after receiving feedback, and outputs sweep information indicating change in the phase delay ϕ relative to the frequency of the current command 300 into the NC apparatus 70. The sweep information is information depicting a curve such as that shown in FIG. 12 within a range from the start frequency to the stop frequency. Having received the sweep information, the NC apparatus 70 acquires the frequency of the current command 300 at the point where the phase delay ϕ reaches -90° as the resonance frequency fr (step S204). Thus, the NC apparatus 70 and the servo amplifier 52 input the current command 300 into the semi-closed loop and detect the resonance frequency fr occurring in the part of the machine tool 1 that holds the tool TO1.

Note that detection of the resonance frequency fr is not limited to detection based on the phase delay ϕ. For example, the frequency at the point where the amplitude magnification M relative to the frequency of the current command 300 reaches the maximum may be detected as the resonance frequency fr. Furthermore, when the tool post 20 is provided with a vibration sensor, the vibration of the tool post 20 relative to the frequency of the current command 300 may be detected by the vibration sensor, and the frequency at the point where the amplitude of the tool post 20 is amplified to the largest extent may be detected as the resonance frequency fr.

After detecting the resonance frequency fr, the NC apparatus 70 determines the resonance frequency fr as the frequency of the vibration Vc (step S206) and then terminates the frequency determination processing. When the detected resonance frequency fr is determined as the frequency of the vibration Vc, the structures from the servo motor 42 to the tool TO1 are vibrated comparatively strongly by the vibration Vc having the resonance frequency fr, which is applied to the drive subject in the initial position P1. By vibrating the structures comparatively strongly within a range where a reduction in the positional accuracy of the tool TO1 due to the resonance itself is suppressed, the lubricating oil 35 spreads more easily over the guide surfaces 33 and 34 before the drive subject starts to move. As a result, the load exerted on the drive system for driving the drive subject when the drive subject starts to move toward the target position P2 can be effectively reduced. Needless to mention, the accuracy of the stop position of the drive subject in the machining mode improves due to a similar action likewise with respect to the B-axis swiveling of the swiveling unit 25, the Z-axis movement of the workpiece W1, and so on.

Note that in order to confirm the vibration conditions of the vibration Vc other than the frequency, such as the amplitude, the NC apparatus 70 may perform the vibration condition confirmation processing illustrated in FIG. 9.

As described above, the vibration Vc is applied to the drive subject for the set period 202 up to the point at which the drive subject starts to move toward the target position P2, and therefore the vibration Vc causes the lubricating oil 35 to spread over the guide surfaces 33 and 34 prior to the start of movement. Accordingly, the initial large friction is applied to the guide surfaces 33 and 34 only over a short distance corresponding to the vibration. When the lubricating oil 35 spreads over the guide surfaces 33 and 34, the friction on the guide surfaces 33 and 34 decreases, leading to a reduction in the torque generated by the servo motor 40 when starting to move the drive subject from the initial position P1 toward the target position P2, and as a result, the load exerted on the drive system for driving the drive subject decreases. With this specific example, therefore, the load exerted on the drive system for driving the drive subject when the drive subject starts to move toward the target position can be reduced, and as a result, deterioration of the drive system can be suppressed.

(3) Modified examples: In the present invention, various modified examples may be considered. For example, the control unit U1 may be constituted by the machine body 2 and the computer 100 rather than by the machine body 2 alone. The closed loop control performed by the control unit U1 is not limited to semi-closed loop control and may be fully closed loop control. The command CM1 for moving the drive subject is not limited to a fast feed command and may also be a cutting feed command for moving the drive subject while cutting the workpiece W1, or the like.

(4) Conclusion: According to the present invention, as described above, it is possible, through various aspects, to provide technology for a machine tool or the like with which the load acting on the drive system for driving the drive subject when the drive subject starts to move toward the target position can be reduced. Needless to mention, the basic actions and effects described above are likewise obtained with technology constituted only by the constituent features pertaining to the independent claims. Moreover, configurations obtained by replacing the configurations disclosed in the above examples with each other or changing the combinations thereof, configurations obtained by replacing the configurations disclosed in the prior art and the above examples with each other or changing the combinations thereof, and so on may also be implemented. The present invention also includes these configurations and so on.

## Claims

1. A machine tool for machining a workpiece using a tool, comprising:
a guide mechanism for guiding at least one drive subject from among the tool and the workpiece;
a servo motor that moves the drive subject guided by the guide mechanism; and
a control unit that controls the servo motor so as to move the drive subject from an initial position to a target position,
wherein the control unit controls the servo motor so as to apply vibration in which an advancing motion toward the target position and a retreating motion opposite to the advancing motion are performed repeatedly to the drive subject for a set period up to a point at which the drive subject starts to move toward the target position from the initial position.

2. The machine tool according to claim 1, wherein the control unit controls the servo motor so as to continue to apply the vibration as a component to movement of the drive subject from the point at which the drive subject starts to move from the initial position toward the target position up to a midway position between the initial position and the target position.

3. The machine tool according to claim 1, wherein the control unit controls the servo motor so as to continue to apply the vibration as a component to movement of the drive subject for a second set period from the point at which the drive subject starts to move from the initial position toward the target position.

4. The machine tool according to claim 1 or claim 2, wherein a frequency of the vibration is included in a resonance frequency band in which resonance can occur in a part of the machine tool that holds the drive subject.

5. The machine tool according to claim 1 or claim 2, wherein the control unit performs closed loop control on the servo motor in order to move the drive subject from the initial position to the target position, and in a frequency determination mode for determining the frequency of the vibration, the control unit detects a resonance frequency occurring in a part of the machine tool that holds the drive subject by inputting a current command having sweep frequency variation into a closed loop, and determines the detected resonance frequency as the frequency of the vibration.
